(19) Europäisches Patentamt
European Patent Office
Office européen des brevets

(11) EP 3 464 494 B1

(12) **EUROPEAN PATENT SPECIFICATION**

(45) Date of publication and mention of the grant of the patent:
**22.12.2021 Bulletin 2021/51**

(21) Application number: **16903547.4**

(22) Date of filing: **03.06.2016**

(51) Int Cl.:
***C09D 133/04*** $^{(2006.01)}$ ***C09D 5/08*** $^{(2006.01)}$

(86) International application number:
**PCT/CN2016/084662**

(87) International publication number:
**WO 2017/206162 (07.12.2017 Gazette 2017/49)**

(54) **AQUEOUS POLYMER DISPERSION AND AQUEOUS COATING COMPOSITION COMPRISING THE SAME**

WÄSSRIGE POLYMERDISPERSION UND WÄSSRIGE BESCHICHTUNGSZUSAMMENSETZUNG DAMIT

DISPERSION AQUEUSE DE POLYMERE ET COMPOSITION DE REVÊTEMENT COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2019 Bulletin 2019/15**

(73) Proprietors:
- **Dow Global Technologies, LLC**
  **Midland, MI 48674 (US)**
- **Rohm and Haas Company**
  **Collegeville, PA 19426 (US)**

(72) Inventors:
- **SHU, Shujun**
  **Shanghai 201203 (CN)**
- **LI, Yaobang**
  **Shanghai 201203 (CN)**
- **ZHENG, Baoqing**
  **Shanghai 201203 (CN)**
- **TANG, Jia**
  **Shanghai 201203 (CN)**
- **GUO, Yan**
  **Shanghai 201203 (CN)**
- **FU, Zhenwen**
  **Collegeville, PA 19426 (US)**

(74) Representative: **Houghton, Mark Phillip**
**Patent Outsourcing Limited**
**Cornerhouse**
**1 King Street**
**Bakewell**
**Derbyshire DE45 1DZ (GB)**

(56) References cited:
**EP-A1- 1 193 298**
**EP-A1- 1 582 567**
**EP-A1- 2 840 092**
**EP-A1- 2 918 615**
**WO-A1-2016/004575**
**US-A1- 2012 214 928**
**US-A1- 2013 066 005**
**US-A1- 2013 085 222**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 464 494 B1

**Description**

FIELD OF THE INVENTION

The present invention relates to an aqueous polymer dispersion and an aqueous coating composition comprising the same.

INTRODUCTION

Solvent borne coating compositions comprising epoxy resins, polyurethane, or alkyl resins are widely used in metal protective coatings due to their anti-corrosion performance, durability, appearance and gloss. Waterborne acrylic polymer dispersions have much less environmental concerns than solvent borne dispersions and are usually used for light to medium duty metal protection.

EP1193298A1 discloses a binder composition for aqueous coatings that exhibit high gloss and superior corrosion resistance when applied to metal substrates comprising an aqueous emulsion copolymer, comprising at least one ethylenically unsaturated monomer and an ethylenically unsaturated strong acid monomer, such as phosphorus containing monomers, particularly phosphoethylmethacrylate; or salts thereof. US2012/214928A1 discloses latexes that are the reaction product of reactants that include a ureido-functional ethylenically unsaturated compound, an ethylenically unsaturated silicone, and another ethylenically unsaturated compound. EP2918615A1 discloses a composition comprising a) a stable aqueous dispersion of polymer particles functionalized with structural units of a phosphorus acid monomer or a salt thereof and; b) a dispersion of pigment particles stabilized by an adsorbing water-soluble dispersant functionalized with structural units of a sulfonic acid monomer or a salt thereof. WO2016/004575A1 discloses a coating composition comprising from 8% to 40% of a polymer; and from 0.1% to 3% of a dispersant. EP2840092A1 discloses a stable aqueous dispersion of acrylic based polymer particles with a first and a second polymeric domain, wherein the first polymeric domain is film-forming at room temperature and the second polymeric domain has a T g of not less than 35 °C, and wherein both polymeric domains include structural units of a ureido monomer. US2013/085222A1 discloses a latex composition comprising a) an opaque polymer having a pigment volume concentration of from 18 to 28; b) fully or partially polymer encapsulated TiO2 particles having a pigment volume concentration of from 8 to 18; c) an extender having a pigment volume concentration of from 0 to 10; d) a binder; e) a thickener; and f) water. US2013/066005A1 discloses a soluble shell polymer composition comprising an alkali soluble emulsion polymer shell and an alkali insoluble emulsion polymer core, which composition is stabilized by a surfactant of the formula $R—(OCH_2CH_2)_{2\text{-}6}OSO_3^-M^+$, where R is a linear, branched, or cyclic $C_8$-$C_{24}$ alkyl or $C_{12}$-$C_{18}$ aralkyl group and M+ is a counterion.

US 6,756,459 B2 discloses an aqueous emulsion copolymer comprising as polymerized units, 28-29% styrene, 36-37% ethylhexyl acrylate, 31-32% methyl methacrylate, and 2.5-3% phosphoethyl methacrylate. Such aqueous emulsion copolymer can provide coatings with improved gloss and corrosion resistance when applied to metal substrates, for example, exhibiting no greater than 20% rust or a blister rating no greater than "M" after at least 7 days of exposure to salt spray according to the ASTM B-117-97 method. For some coating applications, such as general industrial finishes and agriculture construction equipments coatings, it requires coatings with even better anti-corrosion performance to sustain more than 240 hours salt-spray testing at a dry film thickness of about 40~50 μm or even lower. Therefore, there remains a need to provide an aqueous polymer dispersion for coatings with the above-described anti-corrosion property.

SUMMARY OF THE INVENTION

The invention is set out in accordance with the appended claims. The present invention achieves the above-described anti-corrosion property by providing a novel aqueous polymer dispersion and an aqueous coating composition comprising the same. The polymer in the aqueous polymer dispersion comprises, as polymerized units, a specific combination of a phosphorous-containing acid monomer, a cycloalkyl (meth)acrylate, a ureido monomer, a hard monomer, and a soft monomer.

In a first aspect, the present invention is an aqueous polymer dispersion, wherein the polymer comprises as polymerized units, based on the weight of the polymer,

(a) from 0.5% to 3.2% by weight of a phosphorous-containing acid monomer,
(b) from 10% to 50% by weight of a cycloalkyl (meth)acrylate,
(c) from 0.3% to 1.2% by weight of a ureido monomer,
(d) from 25% to 60% by weight of a soft monomer, selected from vinyl esters of versatic acid, butyl acrylate, 2-ethylhexylacrylate, lauryl acrylate, n-butyl methacrylate, lauryl methylacrylate, n-decyl methacrylate, isobutyl acrylate, or mixtures thereof, and
(e) a hard monomer, selected from vinyl aromatic compounds, (meth)acrylic acids, C1-C2 alkyl esters of (meth)acyclic

acid, or mixtures thereof;

wherein the polymer has a weight average molecular weight of 110,000 or lower as measured by Gel Permeation Chromatography with polystyrene standard.

In a second aspect, the present invention is a process of preparing an aqueous polymer dispersion of the first aspect. The process comprises:

preparing the polymer in an aqueous medium by a free-radical polymerization in the presence of a chain transfer agent to form the aqueous polymer dispersion,
wherein the polymer comprises as polymerized units, based on the weight of the polymer,

(a) from 0.5% to 3.0% by weight of a phosphorous-containing acid monomer,
(b) from 10% to 50% by weight of a cycloalkyl (meth)acrylate,
(c) from 0.3% to 1.2% by weight of a ureido monomer,
(d) from 25% to 60% by weight of a soft monomer selected from vinyl esters of versatic acid, butyl acrylate, 2-ethylhexylacrylate, lauryl acrylate, n-butyl methacrylate, lauryl methylacrylate, n-decyl methacrylate, isobutyl acrylate, or mixtures thereof, and
(e) a hard monomer, selected from vinyl aromatic compounds, (meth)acrylic acids, C1-C2 alkyl esters of (meth)acyclic acid, or mixtures thereof.

In a third aspect, the present invention is an aqueous coating composition comprising an aqueous polymer dispersion of the first aspect and a pigment.

"Acrylic" in the present invention includes (meth)acrylic acid, (meth)alkyl acrylate, (meth)acrylamide, (meth)acrylonitrile and their modified forms such as (meth)hydroxyalkyl acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

The polymer useful in the present invention may comprise, as polymerized units, one or more phosphorous-containing acid monomers. Examples of suitable phosphorous-containing acid monomers include phosphoalkyl (meth)acrylates such as phosphoethyl (meth)acrylate, phosphopropyl (meth)acrylate, phosphobutyl (meth)acrylate, salts thereof, and mixtures thereof; $CH_2=C(R)-C(O)-O-(R_1O)_n-P(O)(OH)_2$, wherein R=H or $CH_3$, $R_1$=alkyl, and n=2-6, such as SIPOMER PAM-100, SIPOMER PAM-200, and SIPOMER PAM-300 all available from Solvay; phosphoalkoxy (meth)acrylates such as phospho ethylene glycol (meth)acrylate, phospho di-ethylene glycol (meth)acrylate, phospho tri-ethylene glycol (meth)acrylate, phospho propylene glycol (meth)acrylate, phospho di-propylene glycol (meth)acrylate, phospho tri-propylene glycol (meth)acrylate, salts thereof, and mixtures thereof. Preferred phosphorus-containing acid monomers are dihydrogen phosphate monomers, which include 2-phosphoethyl (meth)acrylate, 2-phosphopropyl (meth)acrylate, 3-phosphopropyl (meth)acrylate, 3-phospho-2-hydroxypropyl (meth)acrylate, SIPOMER PAM-100, SIPOMER PAM-200, SIPOMER PAM-300, or mixtures thereof. More preferably, the phosphorus-containing acid monomer is phosphoethyl methacrylate.

The polymer useful in the present invention may comprise as polymerized units, based on the weight of the polymer, 0.5% by weight or more of the phosphorous-containing acid monomers, 0.75% by weight or more, or even 1% by weight or more, and at the same time, 3.2% by weight or less, 3% by weight or less, 2.5% by weight or less, 2% by weight or less, or even 1.5% by weight or less.

The polymer useful in the present invention may further comprise, as polymerized units, one or more cycloalkyl (meth)acrylates. Examples of suitable cycloalkyl (meth)acrylates include cyclohexyl(meth)acrylate, methcyclohexyl acrylate, isobornyl methacrylate, isobornyl acrylate, dihydrodicyclopentadienyl acrylate, or mixtures thereof. The polymer may comprise as polymerized units, based on the weight of the polymer, 10% by weight or more of the cycloalkyl (meth)acrylate, 15% by weight or more, 20% by weight or more, 25% by weight or more, or even 30% by weight or more, and at the same time, 55% by weight or less, 50% by weight or less, 45% by weight or less, 40% by weight or less, or even 35% by weight or less.

The polymer useful in the present invention may further comprise, as polymerized units, one or more ureido monomers. As used herein, the term "ureido monomers" refers to a compound containing an acrylate or methacrylate group and a cyclic ureido group (i.e., an imidazolidin-2-one group). Preferred ureido monomers are ureido methylacrylate, ureido acrylate, or mixtures thereof. More preferably, the ureido monomers are illustrated below:

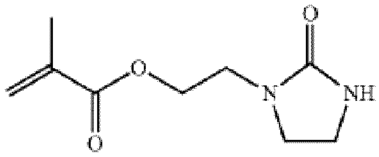, 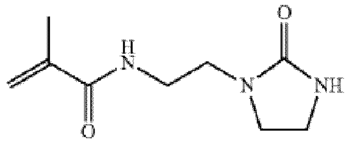, 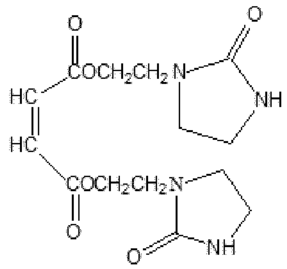,

or mixtures thereof.

The polymer may comprise as polymerized units, based on the weight of the polymer, 0.3% by weight or more of the ureido monomer, 0.4% by weight or more, 0.5% by weight or more, or even 0.6% by weight or more, and at the same time, 1.2% by weight or less, 1.0% by weight or less, 0.9% by weight or less, or even 0.8% by weight or less.

The polymer useful in the present invention may also comprise, as polymerized units, one or more soft monomers. As used herein, the term "soft monomers" refers to a compound, whose homopolymer has a $T_g$ less than 25°C. The soft monomers preferably have a $T_g$ of 0°C or lower, -20°C or lower, -50°C or lower, or even -60°C or lower. The soft monomers are selected from alkyl esters of (meth)acrylic acid, vinyl acetate, or mixtures thereof which include vinyl esters of versatic acid, butyl acrylate, 2-ethylhexylacrylate, lauryl acrylate, n-butyl methacrylate, lauryl methylacrylate, n-decyl methacrylate, isobutyl acrylate, or mixtures thereof. The polymer may comprise as polymerized units, based on the weight of the polymer, 25% by weight or more, 30% by weight or more of the soft monomer, 32 % by weight or more, or even 35% by weight or more, and at the same time, 60% by weight or less, 55% by weight or less, 50% by weight or less, 45% by weigh or less, or even 40% by weight or less.

The polymer useful in the present invention may further comprise, as polymerized units, one or more hard monomers. As used herein, the term "hard monomers" refers to a compound, whose homopolymer has a $T_g$ higher than 25°C. The hard monomers preferably have a $T_g$ of 50°C or higher, 80°C or higher, or even 100°C or higher. The hard monomer herein excludes the cycloalkyl (meth)acrylate described above. The glass transition temperatures of homopolymers may be found, for example, in "Polymer Handbook", edited by J.Brandrup and E. H. Immergut, Interscience Publishers. The hard monomers are selected from vinyl aromatic compounds, (meth)acrylic acids, $C_1$-$C_2$ alkyl esters of (meth)acyclic acid, or mixtures thereof. Examples of suitable hard monomers include styrene, methacrylic acid, acrylic acid, methyl acrylate, ethyl methacrylate, 2-hydroxyl methacrylate, acrylonitrile, or mixtures thereof. In one embodiment, in addition to the phosphorous-containing acid monomer, the cycloalkyl (meth)acrylate, the ureido monomer, and the soft monomer, as polymerized units, the rest of the polymer is the polymerized units of the hard monomer. For example, the polymer may comprise as polymerized units, based on the weight of the polymer, 10% by weight of the hard monomer, 15% by weight or more, 20% by weight or more, or even 30% by weight or more, and at the same time, 60% by weight or less, 55% by weight or less, 50% by weight or less, or even 45% by weight or less. Total weight concentration of polymerized units of the polymer is equal to 100%.

The polymer useful in the present invention may have a weight average molecular weight of 110,000 or less, for example, 105,000 or less, 100,000 or less, 90,000 or less, 80,000 or less, or even 70,000 or less, and at the same time, 20,000 or more, 30,000 or more, 40,000 or more, 50, 000 or more, or even 60,000 or more. The weight average molecular weight may be measured by Gel Permeation Chromatography (GPC) with polystyrene standard.

The types and levels of monomers that constitute the polymerized units of the polymer upon polymerization may be chosen to provide the polymer with a $T_g$ suitable for different applications. The $T_g$ of the polymer useful in the present invention may be 0°C or higher, 10°C or higher, or even 20°C or higher, and at the same time, 60°C or lower, 50°C or lower, or even 40°C or lower. $T_g$ herein may be calculated by using the linear equation, for example,

$$T_g = W_a * T_{ga} + W_b * T_{gb} + W_c * T_{gc}$$

wherein $T_{ga}$, $T_{gb}$, and $T_{gc}$ refer to the $T_g$ of homopolymer of Monomer a, Monomer b, and Monomer c, respectively; and $W_a$, $W_b$, and $W_c$ refer to the weight fraction of Monomer a, Monomer b, and Monomer c, based on the weight of total monomers, respectively.

Preferably, the polymer useful in the present invention comprises as polymerized units, based on the weight of the polymer,

(a) from 1.0% to 1.5% by weight of a phosphorous-containing acid monomer;
(b) from 20% to 30% by weight of a cycloalkyl (meth)acrylate;

(c) from 0.5% to 0.9% by weight of a ureido monomer;

(d) from 30% to 45% by weight of a soft monomer selected from butyl acrylate, 2-ethylhexylacrylate, lauryl acrylate, n-decyl methacrylate, isobutyl acrylate, or mixtures thereof; and

(e) a hard monomer selected from styrene, methacrylic acid, acrylic acid, acrylonitrile, hydroxyl methacrylate, or mixtures thereof.

A process of preparing the polymer useful in the present invention may include polymerization techniques well known in the art. The polymer may be prepared in an aqueous medium by a free-radical polymerization of monomers used to prepare the polymer in the presence of the chain transfer agent to form the aqueous polymer dispersion. Emulsion polymerization of the monomers described above is a preferred process. Monomers refer to compounds or monomers described above used to make the polymer, i.e., form the polymerized units of the polymer after polymerization. Monomers for preparing the polymer may include the phosphorous-containing acid monomer, the cycloalkyl (meth)acrylate, the ureido monomer, the soft monomer, and the hard monomer described above. Total weight concentration of monomers is equal to 100%. In one embodiment, total weight concentration of the phosphorous-containing acid monomer, the cycloalkyl (meth)acrylate, the ureido monomer, the soft monomer, and the hard monomer is equal to 100%. The weight content of each monomer based on the total weight of monomers may be substantially the same as the weight content of such monomer as polymerized units based on the weight of the polymer as described above. Total weight concentration of the monomers for preparing the polymer is equal to 100%. A mixture of the monomers for preparing the polymer may be added neat or as an emulsion in water; or added in one or more additions or continuously, linearly or nonlinearly, over the reaction period of preparing the polymer, or combinations thereof. Temperature suitable for emulsion polymerization processes may be lower than 100°C, in the range of from 30 to 95°C, or in the range of from 50 to 90°C. Multistage free-radical polymerization using the monomers described above can be used, which at least two stages are formed sequentially, and usually results in the formation of the multistage polymer comprising at least two polymer compositions. Each stage of the free-radical polymerization can be conducted by emulsion polymerization of the monomers described above.

In the polymerization process, free radical initiators may be used. The polymerization process of the polymer may be thermally initiated or redox initiated emulsion polymerization, and preferably in each stage when multistage polymerization process is used. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01 to 3.0% by weight, based on the total weight of monomers. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, glycolic acid, hydroxymethanesulfonic acid, glyoxylic acid hydrate, lactic acid, glyceric acid, malic acid, tartaric acid and salts of the preceding acids. Metal salts of iron, copper, manganese, silver, platinum, vanadium, nickel, chromium, palladium, or cobalt may be used to catalyze the redox reaction. Chelating agents for the metals may optionally be used.

In the polymerization process of the polymer useful in the present invention, a surfactant may be used. The surfactant may be added prior to or during the polymerization of the monomers, or combinations thereof. A portion of the surfactant can also be added after the polymerization. Surfactants may be used for both stages or only in the first stage when multistage polymerization is used. These surfactants may include anionic and/or nonionic emulsifiers. Examples of suitable surfactants include alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. In some preferred embodiments, the alkali metal or ammonium salts of alkyl, aryl, or alkylaryl sulfates surfactant are used. The combined amount of the surfactant used is usually from 0.1% to 6% by weight or from 0.3% to 1.5% by weight, based on the weight of total monomers used for preparing the aqueous polymer dispersion of the present invention.

In the polymerization process of preparing the polymer useful in the present invention, one or more chain transfer agents may be used to lower the molecular weight of the emulsion polymer and/or to provide a different molecular weight distribution than would otherwise have been obtained with any free-radical-generating initiator(s). The chain transfer agent may be selected from halogen compounds such as tetrabromomethane; allyl compounds; or mercaptans such as alkyl thioglycolates, alkyl mercaptoalkanoates, and $C_4$-$C_{22}$ linear or branched alkyl mercaptans. Linear or branched $C_4$-$C_{22}$ alkyl mercaptans such as n-dodecyl mercaptan and t-dodecyl mercaptan are preferred. The chain transfer agent may be added in one or more additions or continuously, linearly or not, over most or all of the entire reaction period or during limited portion(s) of the reaction period such as, for example, in the kettle charge and in the reduction of residual monomer stage. The chain transfer agent may be used in an amount effective to provide the obtained polymer with a desired GPC weight average molecular weight, for example, 105,000 or less. The chain transfer

agent may be used in an amount of from 0 to 5% by weight or from 0.2 to 1% by weight, based on the total weight of monomer used to form the polymer.

After polymerization, the obtained polymer may be neutralized by using one or more bases as neutralizers. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as triethyl amine, ethylamine, propylamine, monoisopropylamine, monobutylamine, hexylamine, ethanolamine, diethyl amine, dimethyl amine, di-npropylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, polyethyleneimine or polyvinylamine; aluminum hydroxide; or mixtures thereof.

The average particle diameter of the polymer in the aqueous polymer dispersion of the present invention may be from 70 nm to 150 nm or from 80 nm to 120 nm, as measured by a BI-90 Particle Sizer.

The aqueous polymer dispersion of the present invention further comprises water. The concentration of water may be, by weight based on the total weight of the aqueous dispersion, from 30% to 90% or from 40% to 80%. The aqueous dispersion of the present invention may be useful in many applications including, for example, marine and protective coatings, general industrial finish, metal protective coatings, wood coatings, architecture coatings, traffic paints, paper coatings, leather coatings, and architectural coatings. The present invention also provides an aqueous coating composition comprising the aqueous polymer dispersion described above. The aqueous polymer dispersion in the aqueous coating composition of the present invention may be present, by solids weight based on the total weight of the aqueous coating composition, in an amount of 10% or more, 13% or more, or even 15% or more, and at the same time, 40% or less, 28% or less, or even 25% or less.

The aqueous coating composition of the present invention may also comprise pigments and/or fillers. Pigments may include inorganic pigments and organic pigments, such as titanium dioxide ($TiO_2$), zinc oxide, iron oxide, zinc sulfide, barium sulfate, barium carbonate, opaque polymers such as ROPAQUE™ Ultra E available from The Dow Chemical Company (ROPAQUE is a trademark of The Dow Chemical Company), and anticorrosive pigments such as zinc phosphate , calcium phosphate complex, or mixture thereof. Examples of suitable fillers include talc (hydrated magnesium silicate), silica, calcium carbonate, clay, calcium sulfate, aluminosilicates, silicates, zeolites, mica, diatomaceous earth, solid or hollow glass, ceramic beads, nepheline syenite, feldspar, diatomaceous earth, calcined diatomaceous earth, alumina, kaolin, pyrophyllite, perlite, baryte, wollastonite, or mixtures thereof. Such pigmented coating compositions have a pigment volume concentration (PVC) in the range of from 0 to 40% or from 10 to 30%. PVC is calculated as PVC (%)=Total volume of pigments and fillers/Total dry volume of coating composition.

The aqueous coating composition of the present invention may further comprise one or more defoamers. "Defoamers" herein refers to chemical additives that reduce and hinder the formation of foam. Defoamers may be silicone-based defoamers, mineral oil-based defoamers, ethylene oxide/propylene oxide-based defoamers, alkyl polyacrylates, or mixtures thereof. The defoamer may be present, by weight based on the total weight of the aqueous coating composition, in an amount of from 0 to 1%, from 0.01 to 0.8%, or from 0.03% to 0.5%.

The aqueous coating composition of the present invention may further comprise one or more thickeners, also known as "rheology modifiers". The thickeners may include polyvinyl alcohol, clay materials, acid derivatives, acid copolymers, urethane associate thickeners, poly ether urea polyurethanes, polyether polyurethanes, or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferably, the thickener is HEUR. The thickener may be present, by weight based on the total weight of the aqueous coating composition, in an amount of from 0 to 3%, from 0.05% to 2%, or from 0.1% to 1%.

The aqueous coating composition of the present invention may further comprise one or more wetting agents. "Wetting agents" herein refer to chemical additives that reduce the surface tension of a coating composition, causing the aqueous coating composition to more easily spread across or penetrate the surface of a substrate. Wetting agents may be polycarboxylates, anionic, zwitterionic, or non-ionic. The wetting agent may be present, by weight based on the total weight of the aqueous coating composition, in an amount of from 0 to 2.5%, from 0.1% to 2%, or from 0.2% to 1%.

The aqueous coating composition of the present invention may further comprise one or more coalescents. "Coalescents" herein refer to slow-evaporating solvents that fuse polymer particles into a continuous film under ambient condition. Examples of suitable coalescents include texanol, 2-n-butoxyethanol, dipropylene glycol n-butyl ether, propylene glycol n-butyl ether, dipropylene glycol methyl ether, propylene glycol methyl ether, propylene glycol n-propyl

ether, diethylene glycol monobutyl ether, ethylene glycol monobutyl ether, ethylene glycol monohexyl ether, triethylene glycol monobutyl ether, dipropylene glycol n-propyl ether, n-butyl ether, or mixtures thereof. Preferred coalescents include dipropylene glycol n-butyl ether, ethylene glycol monobutyl ether, diethylene glycol monobutyl ether, n-butyl ether, or mixtures thereof. The coalescents may be present, by weight based on the total weight of the aqueous coating composition, in an amount of from 0 to 10%, from 0.1% to 9%, or from 1% to 8%.

The aqueous coating composition of the present invention may further comprise water. The concentration of water may be, by weight based on the total weight of the aqueous coating composition, from 30% to 90%, from 40% to 80%, or from 60% to 70%.

In addition to the components described above, the aqueous coating composition of the present invention may further comprise any one or combination of the following additives: buffers, neutralizers, dispersants, humectants, mildewcides, biocides, anti-skinning agents, colorants, flowing agents, anti-oxidants, plasticizers, leveling agents, thixotropic agents, adhesion promoters, and grind vehicles. These additives may be present, by weight based on the total weight of the aqueous coating composition, in a combined amount of from 0 to 10%, from 0.001% to 10%, or from 0.01% to 2%. The solids content of the aqueous coating composition may be from 30% to 55% by volume.

The aqueous coating composition of the present invention may be prepared with techniques known in the coating art. The process of preparing the aqueous coating composition of the present invention may comprise by admixing the aqueous polymer dispersion with other optional components as described above. Components in the aqueous coating composition may be mixed in any order to provide the aqueous coating composition of the present invention. Any of the above-mentioned optional components may also be added to the composition during or prior to the mixing to form the aqueous coating composition. For example, optionally, at least one pigment is well dispersed in an aqueous medium under high shear such as is afforded by a COWLES mixer or, in an alternative, at least one pre-dispersed pigment may be used. Then the aqueous polymer dispersion is added under low shear stirring along with other optional components as described above.

The aqueous coating composition of the present invention exhibits less than 5% rust and a blister rating "F" or better at a dry film thickness of 50±10 μm after at least 240 hours of exposure to salt spray when coated onto a corrosion susceptible substrate, such as cold rolled steel. The salt spray test may be conducted according to the ASTM B-117-2011 method. The aqueous coating composition may also demonstrate an adhesion rating of "4B" or higher at a dry film thickness of 50±10 μm, according to the ASTM D3359-2009 method, when coated onto a corrosion susceptible substrate such as cold rolled steel.

The present invention also provides a method of improving corrosion resistance of a corrosion susceptible substrate, such as metal. The method comprises: providing the aqueous coating composition of the present invention, applying the aqueous coating composition to a metal substrate, and drying, or allowing to dry, the aqueous coating composition to form a coating. "Improving corrosion resistance" means the coating have improved corrosion resistance property, that is, the coating with a thickness of 50±10 μm exhibits less than 5% rust and a blister rating "F" or better after at least 240 hours of exposure to salt spray according to ASTM B-117-2011 method.

The aqueous coating composition of the present invention can be applied to, and adhered to, a substrate such as metal, primed surfaces and previously painted surfaces. The aqueous coating composition on the substrate is dried, or allowed to dry at room temperature (20-25°C), or at an elevated temperature, for example, from 35°C to 60°C to form a film (this is, coating).

A method of preparing a coating may comprise forming the aqueous coating composition of the present invention, applying the aqueous coating composition to a substrate, and drying, or allowing to dry, the applied coating composition to form the coating.

A process of using the aqueous coating composition of the present invention may comprise: applying the aqueous coating composition to a substrate, and drying, or allowing to dry, the applied coating composition. The aqueous coating composition of the present invention can be applied to a substrate by incumbent means including brushing, dipping, rolling and spraying. The aqueous coating composition is preferably applied by spraying. The standard spray techniques and equipment for spraying such as air-atomized spray, air spray, airless spray, high volume low pressure spray, and electrostatic spray such as electrostatic bell application, and either manual or automatic methods can be used.

The aqueous coating composition is suitable for various coating applications, such as marine protective coatings, general industrial finishes, metal protective coatings, wood coatings, architecture coatings, traffic paints, paper coatings, and leather coatings. The aqueous coating composition is particularly suitable for metal protective coatings. The aqueous coating composition can be used as a primer, a topcoat, as one-coat direct-to-metal coating, or in combination with other coatings to form multi-layer coatings.

## EXAMPLES

Some embodiments of the invention will now be described in the following Examples, wherein all parts and percentages are by weight unless otherwise specified.

The following materials are used in preparing aqueous polymer dispersions in the examples:

Styrene ("ST"), 2-ethylhexyl acrylate ("EHA"), methacrylic acid ("MAA"), and methyl methacrylate ("MMA") are all available from Huayi Chemicals.
Cyclohexy methacrylate ("CHMA") is available from BASF.
Butyl acrylate ("BA"), phosphoethyl methacrylate ("PEM"), and methacrylo ethylethylene urea ("MEU") are all available from The Dow Chemical Company.
n-Dodecyl mercaptan ("nDDM") is used as a chain transfer agent.
RHODAFAC RS-610, available from Solvay, is used as a phosphate surfactant.
DISPONIL FES-32 is a surfactant available from BASF.
KATHON™ Preservatives, available from The Dow Chemical Company, is an isothiazolone and used as a biocide (KATHON is a trademark of The Dow Chemical Company).
NOPCO NDW, available from San Nopco, is a mineral oil and used as a defoamer.

The following standard analytical equipment and methods are used in the Examples.

Panels were prepared by drawing down coating compositions on a cold rolled steel substrate and dried for 7 days in a controlled temperature room at 23° C/50% relative humidity to give panels with a dry film thickness of 40-50 μm. Properties (anti-corrosion, dry and wet adhesion, and water resistance properties) of the obtained panels were evaluated according to the following test methods.

Salt-spray Test

Corrosion resistance was tested by exposure of the as prepared panels to a salt spray environment (5% sodium chloride fog) in accordance with the ASTM B-117-2011 method. Exposed metal was covered with tape (3M plastic tape #471) prior to exposure. A scribe mark made with a razor blade was scratched into the bottom half of the panels immediately before exposure. Panels were exposed to the salt spray environment for 240 hours, and then removed to rate blistering and rust. The results were presented as blister/rust ratings. Blister ratings were conducted in accordance with the ASTM D714-02(2009) method and comprised a number and one or more letters. The letter is a qualitative representation of the density of bubbles, whereby "F" refers to few, "D" refers to dense, "MD" refers to medium dense, and "D" refers to dense. The number refers to the size of the blister, whereby 0 is the largest size, 10 is no blister. The bigger the number, the smaller the size of blister. Rust ratings were shown as a percentage of rust on a panel as according to the ASTM D610-2001 test method. Therefore, a result of 8F/3% rust means that there was a few amount of small blisters with 3% of the panel covered by rust. The panels with blister rating being F or better and with less than 5% rust are acceptable.

Dry and wet adhesion

Dry adhesion of the as prepared panels was evaluated according to the ASTM D3359-2009 method.

Wet adhesion: The as prepared panels were dipped into water at 23°C for 24 hours. Then, the panels were taken out of water and padded dry. The films on the panels were then cross-cut and tested according to the ASTM D3359-2009 method.

Ratings for both dry adhesion and wet adhesion were shown in Table 1 as a percentage of the paint film removed, whereby 5B is the best and 0B is the worst. The panels with rating being 4B or better are acceptable.

Table 1

| Percent area removed | Classification |
|---|---|
| 0%, none | 5B |
| Less than 5% | 4B |
| 5~15% | 3B |
| 15~35% | 2B |
| 36~65% | 1B |
| Greater than 65% | 0B |

Water Resistance

The as prepared panels were dipped into water and the amount of rust and blister were observed at different time. Blister ratings and rust ratings were conducted substantially the same as those described above in the salt-spray test, e.g., blister ratings and rust ratings were conducted according to the ASTM D714-02(2009) method and the ASTM D610-2001 method, respectively. The panels with water resistant rating being F or better are acceptable.

Molecular Weight

Samples were dissolved in tetrahydrofuran/fluoroacetic acid (FA) (5%) and the concentration was 2 mg/mL and filtered through 0.45 μm PTFE filter prior to GPC analysis. GPC experiments (Agilent 1200 with One Mixed B columns (7.8x300 mm) in tandem. 65#) were undertaken to measure molecular weights. Data were acquired and processed using Agilent Refractive Index detector (40°C) and Agilent GPC software. Data was collected from duplicate injections. Calibration curve were PL polystyrene 1 Narrow standards with molecular weights ranging from 2329,000 to 1480 g/mol using polynom 3rd fitness. Mobile phase solvent was tetrahydrofuran. Flow rate was 1.0 mL/min, and column temperature was 40°C.

Example (Ex) 1 Aqueous polymer dispersion

Preparation of Monomer Emulsion - RHODAFAC RS-610 surfactant (35 g, 25% active) was dissolved in deionized water (1075 g), with stirring. An emulsified monomer mixture was prepared by adding the following monomers slowly to the agitated solution: 2-EHA, ST, CHMA, MAA, MEU, and PEM.

A solution containing DISPONIL FES-32 surfactant (16.5 g, 31% active) and deionized water (455 g) was placed in a 4-necked, 5 liter round bottom flask equipped with a thermocouple, a cooling condenser and an agitator, and heated to 85 °C under nitrogen. An aqueous sodium carbonate solution (1.4 g sodium carbonate in 38 g deionized water), aqueous ammonia persulfate (APS) initiator solution (1.4 g APS in 15 g deionized water), and 4.1 % of Monomer Emulsion were added to the flask. Within about 5 minutes, initiation of polymerization was confirmed by the increase of temperature by 3 °C and a change of the external appearance of the reaction mixture. After generation of heat had ended, the remainder of the Monomer Emulsion was added gradually to the flask over a period of 90 minutes, with stirring. Polymerization reaction temperature was maintained at 87-89 °C. After completing the addition, the vessel that contained Monomer Emulsion and feeding pipes leading into the flask were rinsed with 30 g deionized water, and the rinse was added back to the flask. The reaction mixture was held at 85 °C for 10 minutes, and then cooled to 80 °C. Catalyst t-butylhydroperoxide (t-BHP) and reductant isoascorbic acid (IAA) were added together to chase the monomers over 30 minutes. After the chaser stage, the reaction was cooled to 50 °C and then neutralized to pH 7.0-8.0 by ammonia. The reaction mixture was held at 45-50 °C for 10 minutes, and then the biocide and the defoamer were added over 10 minutes. The reaction was cooled to room temperature to obtain the aqueous polymer dispersion.

Exs 2-8 Aqueous Polymer Dispersions

The aqueous polymer dispersions were prepared according the same procedure as described above for preparing the aqueous polymer dispersion of Ex 1, based on polymer compositions given in Table 2. Molecular weight of the polymers were measured according to the test method described above and given in Table 2.

Table 2

| Polymer Dispersion | Sample ID | Polymer Composition (weight ratio*) | Molecular Weight |
|---|---|---|---|
| Ex 1 | 818 | 36.0EHA/36.7ST/22.6CHMA/2.0MAA/1.5PEM/ 0.7MEU/ 0.5n-DDM | 63,723 |
| Ex 2 | 820 | 36.5EHA/36.7ST/22.6CHMA/2.0MAA/1.0PEM/ 0.7MEU/ 0.5n-DDM | 67,534 |
| Ex 3 | 822 | 36.5EHA/37.2ST/22.6CHMA/2.00MAA/0.50PE M/0.7MEU/ 0.5n-DDM | 68,322 |
| Ex 4 | 824 | 36.5EHA/18.8ST/40.00CHMA/2.00MAA/1.5PE M/0.7MEU/ 0.5n-DDM | NA |

(continued)

| Polymer Dispersion | Sample ID | Polymer Composition (weight ratio*) | Molecular Weight |
|---|---|---|---|
| Ex 5 | 8390 | 36.5EHA/34.7ST/22.6CHMA/2.00MAA/3.0PEM /1.2MEU/ 0.5n-DDM | NA |
| Ex 6 | 8396 | 36.5EHA/9.1ST/50.00CHMA/2.00MAA/1.5PEM /0.7MEU/ 0.2n-DDM | 97,600 |
| Ex 7 | 8391 | 36.5EHA/48.36ST/10.00CHMA/2.00MAA/1.5PE M/0.7MEU/ 1.0n-DDM | 43,210 |
| Ex 8 | 8383 | 36.5EHA/36.3ST/22.6CHMA/2.00MAA/1.5PEM /0.3MEU/ 0.8n-DDM | 54,313 |
| *Numbers separated by a single slash indicates weight ratio of polymerized units of monomers in polymer | | | |

Comparative (Comp) Exs A-K Aqueous Polymer Dispersions

The aqueous polymer dispersions were prepared according the same procedure as described above for preparing the aqueous polymer dispersion of Ex 1, based on polymer compositions given in Table 3. Molecular weight of the polymers were measured according to the test method described above and given in Table 3.

Table 3

| Polymer Dispersion | Polymer Composition (weight ratio*) | Molecular weight |
|---|---|---|
| Comp Ex A | 36.5EHA/35.2ST/22.6MMA/3.5MAA/1.5PEM/0.7MEU | 108,880 |
| Comp Ex B | 36.5EHA/34.7ST/22.6MMA/3.50MAA/1.5PEM/0.7MEU/0.5n-DDM | NA |
| Comp Ex C | 36.5EHA/35.2ST/22.6CHMA/3.5MAA/1.5PEM/0.7MEU | 112,310 |
| Comp Ex D | 36.5EHA/36.7ST/22.6MMA/3.5MAA/0.7MEU | NA |
| Comp Ex E | 36.5EHA/36.2ST/22.6CHMA/3.5MAA/0.7MEU/0.5n-DDM | 69,857 |
| Comp Ex F | 36.5EHA/36.2ST/22.6MMA/3.5MAA/0.7MEU/0.5n-DDM | NA |
| Comp Ex G | 36.5EHA/36.9ST/22.6CHMA/2.0MAA/1.5PEM/0.5n-DDM | NA |
| Comp Ex H | 35.6EHA/60.00CHMA/2.00MAA/3.5PEM/0.7MEU/0.2n-DDM | NA |
| Comp Ex I | 36.5EHA/36.0ST/22.6CHMA/2.00MAA/1.5PEM/0.2MEU/1.2n-DDM | 20,141 |
| Comp Ex J | 36.5EHA/35.8ST/22.6CHMA/2.00MAA/1.5PEM/1.5MEU/0.1n-DDM | 98,476 |
| Comp Ex K | 36.5EHA/52.0ST/8.0CHMA/2.00MAA/0.3PEM/0.7MEU/0.5n-DDM | NA |
| *Numbers separated by a single slash indicates weight ratio of polymerized units of monomers in polymer | | |

Coating Compositions P-1 to P-7 and P-A to P-K

The above obtained polymer dispersions were used as binders in preparing coating compositions of P-1 to P-7 and P-A to P-K, based formulations given in Tables 4 and 5. Water, the dispersant, wetting agent, neutralizer, defoamer and pigment were first mixed to allow the pigment to wet thoroughly using a conventional lab mixer, then water was further added to form the grind. The binder, water and the neutralizer were mixed to form the premix, and then the grind obtained above was added into the premix for 10 minutes. Then the flash rust inhibitor, rheology modifier and coalescent were added into the mixture obtained above to obtain the coating compositions. The obtained coating compositions all had a pigment volume concentration (PVC) of 20%, and volume solids of 40%. The coating compositions were evaluated according to the test methods described above. Properties of the obtained coatings are given in Tables 5 and 6.

Table 4

| Raw Materials | Kilogram | Function | Supplier |
|---|---|---|---|
| ***Grind*** | | | |
| Water | 42.00 | | |
| OROTAN™ 681 acrylic dispersant | 7.80 | Dispersant | The Dow Chemical Company |
| SURFYNOL TG Nonylphenol ethoxylate | 1.99 | Wetting agent | Air Products |
| Aqueous ammonia (28%) | 1.99 | Neutralizer | |
| TEGO Airex 902W | 0.46 | Defoamer | Evonik |
| Ti-Pure R-706 $TiO_2$ | 209.24 | Pigment | DuPont |
| Water | 42.00 | | |
| *Subtotal* | 305.48 | | |
| ***Letdown*** | | | |
| Aqueous polymer dispersion | 604.60 | Binder | Self-prepared |
| Water | 27.00 | | |
| Aqueous ammonia (28%) | 4.00 | Neutralizer | |
| Sodium nitrite (15%) | 8.97 | Flash Rust Inhibitor | |
| ACRYSOL™ RM-8W HEUR | 2.00 | Rheology modifier | The Dow Chemical Company |
| TEXANOL ester alcohol | 30.00 | Coalescent | Eastman |
| *Total* | 982.05 | | |
| **OROTAN and ACRYSOL are trademarks of The Dow Chemical Company.* | | | |

Tables 5 and 6 give properties of coatings made from the coating compositions obtained above. As shown in Table 5, coatings made from coating compositions of P-1 to P-8 all demonstrated excellent corrosion resistance (rating F or above) and good adhesion. In contrast, as shown in Table 6, coatings made from comparative coating compositions (P-A to P-K) showed poorer corrosion resistance.

Table 5

| Coating Composition | Binder (Aqueous polymer dispersion) | Adhesion (dry/wet) | Salt spray resistance (240 hours) | Water resistance (240 hours) |
|---|---|---|---|---|
| P-1 | Ex 1 | 5B/5B | 10F/2%rust | 10 |
| P-2 | Ex 2 | 5B/5B | 10F/none rust | 10 |
| P-3 | Ex 3 | 5B/5B | 8F/2% rust | 10 |
| P-4 | Ex 4 | 5B/5B | 8F/3%rust | 10 |
| P-5 | Ex 5 | 5B/5B | 8F/3% rust | 10 |
| P-6 | Ex 6 | 5B/5B | 8F/3% rust | 10 |
| P-7 | Ex 7 | 5B/5B | 8F/3% rust | 10 |
| P-8 | Ex 8 | 5B/5B | 6F/2% rust | 10 |

Table 6

| Coating Composition | Binder (Aqueous polymer dispersion) | Adhesion (dry/wet) | Salt spray resistance (240 hours) | Water resistance (240 hours) |
|---|---|---|---|---|
| P-A | Comp Ex A | 5B/4B | 2D/10% rust | 2MD |
| P-B | Comp Ex B | 5B/5B | 8M/5% rust | 10 |
| P-C | Comp Ex C | 5B/5B | 8M/10% rust | 10 |
| P-D | Comp Ex D | 5B/5B | 8M/15% rust | 10 |
| P-E | Comp Ex E | 5B/5B | 8F/10% rust | 10 |
| P-F | Comp Ex F | 5B/5B | 6M/5% rust | 10 |
| P-G | Comp Ex G | 5B/4B | 6MD/3%rust | 6F |
| P-H | Comp Ex H | 5B/5B | 8M/5% rust | 10 |
| P-I | Comp Ex I | 5B/5B | 6M/5% rust | 8F |
| P-J | Comp Ex J | 5B/5B | 6M/3% rust | 6F |
| P-K | Comp Ex K | 5B/4B | 4D/50%Rust | 6MD |

## Claims

**1.** An aqueous polymer dispersion, wherein the polymer comprises as polymerized units, based on the weight of the polymer,

(a) from 0.5% to 3.2% by weight of a phosphorous-containing acid monomer,
(b) from 10% to 50% by weight of a cycloalkyl (meth)acrylate,
(c) from 0.3% to 1.2% by weight of a ureido monomer,
(d) from 25% to 60% by weight of a soft monomer, selected from vinyl esters of versatic acid, butyl acrylate, 2-ethylhexylacrylate, lauryl acrylate, n-butyl methacrylate, lauryl methylacrylate, n-decyl methacrylate, isobutyl acrylate, or mixtures thereof, and
(e) a hard monomer, selected from vinyl aromatic compounds, (meth)acrylic acids, C1-C2 alkyl esters of (meth)acrylic acid, or mixtures thereof;

wherein the polymer has a weight average molecular weight of 110,000 or less as measured by Gel Permeation Chromatography with polystyrene standard.

**2.** The aqueous polymer dispersion of claim 1, wherein the polymer has a glass transition temperature of from 0°C to 60°C, wherein the glass transition temperature of the polymer is calculated by using the linear equation, for example,

$$T_g = W_a * T_{ga} + W_b * T_{gb} + W_c * T_{gc}$$

wherein $T_{ga}$, $T_{gb}$, and $T_{gc}$ refer to the $T_g$ of homopolymer of Monomer a, Monomer b, and Monomer c, respectively; and $W_a$, $W_b$, and $W_c$ refer to the weight fraction of Monomer a, Monomer b, and Monomer c, based on the weight of total monomers, respectively.

**3.** The aqueous polymer dispersion of claim 1 or 2, wherein the polymer has a weight average molecular weight of the polymer is from 20,000 to 80,000.

**4.** The aqueous polymer dispersion of claim 1 or 2, wherein the polymer comprises as polymerized units, based on the weight of the polymer, from 0.7% to 2.5% by weight of the phosphorous-containing acid monomer.

**5.** The aqueous polymer dispersion of claim 1 or 2, wherein the phosphorous-containing acid monomer is selected from phosphoethyl (meth)acrylate, phosphopropyl (meth)acrylate, phosphobutyl (meth)acrylate, or mixtures thereof.

6. The aqueous polymer dispersion of claim 1 or 2, wherein the polymer comprises as polymerized units, based on the weight of the polymer, from 0.5% to 1.0% by weight of the ureido monomer.

7. The aqueous polymer dispersion of claim 1 or 2, wherein the ureido monomer is selected from ureido methyl acrylate, ureido acrylate, or mixtures thereof.

8. The aqueous polymer dispersion of claim 1 or 2, wherein the polymer comprises as polymerized units, based on the weight of the polymer, from 20% to 40% by weight of the cycloalkyl (meth)acrylate.

9. The aqueous polymer dispersion of claim 1 or 2, wherein the cycloalkyl (meth)acrylate is cyclohexyl methacrylate.

10. The aqueous polymer dispersion of claim 1 or 2, wherein the hard monomer is selected from styrene, methacrylic acid, acrylic acid, or mixtures thereof.

11. The aqueous polymer dispersion of claim 1 or 2, wherein the soft monomer is selected from butyl acrylate, 2-ethylhexylacrylate, lauryl acrylate, n-decyl methacrylate, isobutyl acrylate, or mixtures thereof.

12. The aqueous polymer dispersion of claim 1 or 2, wherein the polymer comprises as polymerized units, based on the weight of the polymer,

(a) from 1.0% to 1.5% by weight of a phosphorous-containing acid monomer;
(b) from 20% to 30% by weight of a cycloalkyl (meth)acrylate;
(c) from 0.5% to 0.9% by weight of a ureido monomer;
(d) from 30% to 45% by weight of a soft monomer selected from butyl acrylate, 2-ethylhexylacrylate, lauryl acrylate, or mixtures thereof; and
(e) a hard monomer selected from styrene, methacrylic acid, acrylic acid, or mixtures thereof.

13. A process of preparing an aqueous polymer dispersion of any one of claims 1-12, comprising:
preparing the polymer in an aqueous medium by a free-radical polymerization in the presence of a chain transfer agent to form the aqueous polymer dispersion.

14. An aqueous coating composition comprising an aqueous polymer dispersion of any one of claims 1-12 and a pigment.

## Patentansprüche

1. Eine wässrige Polymerdispersion, wobei das Polymer als polymerisierte Einheiten, bezogen auf das Gewicht des Polymers, Folgendes beinhaltet:

(a) zu 0,5 Gew.-% bis 3,2 Gew.-% ein phosphorhaltiges Säuremonomer,
(b) zu 10 Gew.-% bis 50 Gew.-% ein Cycloalkyl(meth)acrylat,
(c) zu 0,3 Gew.-% bis 1,2 Gew.-% ein Ureidomonomer,
(d) zu 25 Gew.-% bis 60 Gew.-% ein weiches Monomer, ausgewählt aus Vinylestern von Versaticsäure, Butylacrylat, 2-Ethylhexylacrylat, Laurylacrylat, n-Butylmethacrylat, Laurylmethacrylat, n-Decylmethacrylat, Isobutylacrylat oder Mischungen davon, und
(e) ein hartes Monomer, ausgewählt aus vinylaromatischen Verbindungen, (Meth)acrylsäuren, C1—C2-Alkylestern von (Meth)acrylsäure oder Mischungen davon;

wobei das Polymer ein gewichtsmittleres Molekulargewicht von 110 000 oder weniger, wie durch Gelpermeationschromatographie mit Polystyrolstandard gemessen, aufweist.

2. Wässrige Polymerdispersion gemäß Anspruch 1, wobei das Polymer eine Glasübergangstemperatur von 0 °C bis 60 °C aufweist, wobei die Glasübergangstemperatur des Polymers unter Verwendung beispielsweise der folgenden linearen Gleichung berechnet wird:
$T_g = W_a * T_{ga} + W_b * T_{gb} + W_c * T_{gc}$ wobei sich $T_{ga}$, $T_{gb}$ und $T_{gc}$ auf die $T_g$ des Homopolymers von Monomer a, Monomer b bzw. Monomer c beziehen; und sich $W_a$, $W_b$ und $W_c$ auf den Gewichtsanteil von Monomer a, Monomer b bzw. Monomer c beziehen, jeweils bezogen auf das Gewicht der gesamten Monomere.

3. Wässrige Polymerdispersion gemäß Anspruch 1 oder 2, wobei das Polymer ein gewichtsmittleres Molekulargewicht des Polymers von 20 000 bis 80 000 aufweist.

4. Wässrige Polymerdispersion gemäß Anspruch 1 oder 2, wobei das Polymer als polymerisierte Einheiten, bezogen auf das Gewicht des Polymers, zu 0,7 Gew.-% bis 2,5 Gew.-% das phosphorhaltige Säuremonomer beinhaltet.

5. Wässrige Polymerdispersion gemäß Anspruch 1 oder 2, wobei das phosphorhaltige Säuremonomer ausgewählt ist aus Phosphoethyl(meth)acrylat, Phosphopropyl(meth)acrylat, Phosphobutyl(meth)acrylat oder Mischungen davon.

6. Wässrige Polymerdispersion gemäß Anspruch 1 oder 2, wobei das Polymer als polymerisierte Einheiten, bezogen auf das Gewicht des Polymers, zu 0,5 Gew.-% bis 1,0 Gew.-% das Ureidomonomer beinhaltet.

7. Wässrige Polymerdispersion gemäß Anspruch 1 oder 2, wobei das Ureidomonomer aus Ureidomethylacrylat, Ureidoacrylat oder Mischungen davon ausgewählt ist.

8. Wässrige Polymerdispersion gemäß Anspruch 1 oder 2, wobei das Polymer als polymerisierte Einheiten, bezogen auf das Gewicht des Polymers, zu 20 Gew.-% bis 40 Gew.-% das Cycloalkyl(meth)acrylat beinhaltet.

9. Wässrige Polymerdispersion gemäß Anspruch 1 oder 2, wobei das Cycloalkyl(meth)acrylat Cyclohexylmethacrylat ist.

10. Wässrige Polymerdispersion gemäß Anspruch 1 oder 2, wobei das harte Monomer aus Styrol, Methacrylsäure, Acrylsäure oder Mischungen davon ausgewählt ist.

11. Wässrige Polymerdispersion gemäß Anspruch 1 oder 2, wobei das weiche Monomer aus Butylacrylat, 2-Ethylhexylacrylat, Laurylacrylat, n-Decylmethacrylat, Isobutylacrylat oder Mischungen davon ausgewählt ist.

12. Wässrige Polymerdispersion gemäß Anspruch 1 oder 2, wobei das Polymer als polymerisierte Einheiten, bezogen auf das Gewicht des Polymers, Folgendes beinhaltet:

(a) zu 1,0 Gew.-% bis 1,5 Gew.-% ein phosphorhaltiges Säuremonomer;
(b) zu 20 Gew.-% bis 30 Gew.-% ein Cycloalkyl(meth)acrylat;
(c) zu 0,5 Gew.-% bis 0,9 Gew.-% ein Ureidomonomer;
(d) zu 30 Gew.-% bis 45 Gew.-% ein weiches Monomer, ausgewählt aus Butylacrylat, 2-Ethylhexylacrylat, Laurylacrylat oder Mischungen davon; und
(e) ein hartes Monomer, ausgewählt aus Styrol, Methacrylsäure, Acrylsäure oder Mischungen davon.

13. Ein Verfahren zum Herstellen einer wässrigen Polymerdispersion gemäß einem der Ansprüche 1-12, das Folgendes beinhaltet:
Herstellen des Polymers in einem wässrigen Medium durch Radikalpolymerisation in Gegenwart eines Kettenüberträgers, um die wässrige Polymerdispersion zu bilden.

14. Eine wässrige Beschichtungszusammensetzung, die eine wässrige Polymerdispersion gemäß einem der Ansprüche 1—12 und ein Pigment beinhaltet.

## Revendications

1. Une dispersion de polymère aqueuse, où le polymère comprend en tant qu'unités polymérisées, rapporté au poids du polymère,

(a) de 0,5 % à 3,2 % en poids d'un monomère acide contenant du phosphore,
(b) de 10 % à 50 % en poids d'un (méth)acrylate de cycloalkyle,
(c) de 0,3 % à 1,2 % en poids d'un monomère uréido,
(d) de 25 % à 60 % en poids d'un monomère mou, sélectionné parmi des esters vinyliques d'acide versatique, l'acrylate de butyle, le 2-éthylhexylacrylate, l'acrylate de lauryle, le méthacrylate de n-butyle, le méthacrylate de lauryle, le méthacrylate de n-décyle, l'acrylate d'isobutyle, ou des mélanges de ceux-ci, et
(e) un monomère dur, sélectionné parmi des composés vinyl aromatiques, des acides (méth)acryliques, des

esters d'alkyle en C1-C2 d'acide (méth)acrylique, ou des mélanges de ceux-ci ;

où le polymère a une masse moléculaire moyenne en poids de 110 000 ou moins telle que mesurée par chromatographie par perméation sur gel avec un étalon de polystyrène.

**2.** La dispersion de polymère aqueuse de la revendication 1, où le polymère a une température de transition vitreuse allant de 0 °C à 60 °C, où la température de transition vitreuse du polymère est calculée en utilisant l'équation linéaire, par exemple,

$$T_g = W_a * T_{ga} + W_b * T_{gb} + W_c * T_{gc}$$

où $T_{ga}$, $T_{gb}$, et $T_{gc}$ font référence à la $T_g$ d'homopolymère du monomère a, du monomère b, et du monomère c, respectivement ; et $W_a$, $W_b$, et $W_c$ font référence à la fraction de poids du monomère a, du monomère b, et du monomère c, rapporté au poids des monomères totaux, respectivement.

**3.** La dispersion de polymère aqueuse de la revendication 1 ou de la revendication 2, où le polymère a une masse moléculaire moyenne en poids du polymère allant de 20 000 à 80 000.

**4.** La dispersion de polymère aqueuse de la revendication 1 ou de la revendication 2, où le polymère comprend en tant qu'unités polymérisées, rapporté au poids du polymère, de 0,7 % à 2,5 % en poids du monomère acide contenant du phosphore.

**5.** La dispersion de polymère aqueuse de la revendication 1 ou de la revendication 2, où le monomère d'acide contenant du phosphore est sélectionné parmi le (méth)acrylate de phosphoéthyle, le (méth)acrylate de phosphopropyle, le (méth)acrylate de phosphobutyle, ou des mélanges de ceux-ci.

**6.** La dispersion de polymère aqueuse de la revendication 1 ou de la revendication 2, où le polymère comprend en tant qu'unités polymérisées, rapporté au poids du polymère, de 0,5 % à 1,0 % en poids du monomère uréido.

**7.** La dispersion de polymère aqueuse de la revendication 1 ou de la revendication 2, où le monomère uréido est sélectionné parmi l'acrylate de méthyle uréido, l'acrylate uréido, ou des mélanges de ceux-ci.

**8.** La dispersion de polymère aqueuse de la revendication 1 ou de la revendication 2, où le polymère comprend en tant qu'unités polymérisées, rapporté au poids du polymère, de 20 % à 40 % en poids du (méth)acrylate de cycloalkyle.

**9.** La dispersion de polymère aqueuse de la revendication 1 ou de la revendication 2, où le (méth)acrylate de cycloalkyle est le méthacrylate de cyclohexyle.

**10.** La dispersion de polymère aqueuse de la revendication 1 ou de la revendication 2, où le monomère dur est sélectionné parmi le styrène, l'acide méthacrylique, l'acide acrylique, ou des mélanges de ceux-ci.

**11.** La dispersion de polymère aqueuse de la revendication 1 ou de la revendication 2, où le monomère mou est sélectionné parmi l'acrylate de butyle, le 2-éthylhexylacrylate, l'acrylate de lauryle, le méthacrylate de n-décyle, l'acrylate d'isobutyle, ou des mélanges de ceux-ci.

**12.** La dispersion de polymère aqueuse de la revendication 1 ou de la revendication 2, où le polymère comprend en tant qu'unités polymérisées, rapporté au poids du polymère,

(a) de 1,0 % à 1,5 % en poids d'un monomère acide contenant du phosphore ;
(b) de 20 % à 30 % en poids d'un (méth)acrylate de cycloalkyle ;
(c) de 0,5 % à 0,9 % en poids d'un monomère uréido ;
(d) de 30 % à 45 % en poids d'un monomère mou sélectionné parmi l'acrylate de butyle, le 2-éthylhexylacrylate, l'acrylate de lauryle, ou des mélanges de ceux-ci ; et
(e) un monomère dur sélectionné parmi le styrène, l'acide méthacrylique, l'acide acrylique, ou des mélanges de ceux-ci.

**13.** Un procédé de préparation d'une dispersion de polymère aqueuse de n'importe laquelle des revendications 1 à 12,

comprenant :
la préparation du polymère dans un milieu aqueux par une polymérisation radicalaire en présence d'un agent de transfert de chaîne afin de former la dispersion de polymère aqueuse.

**14.** Une composition de revêtement aqueuse comprenant une dispersion de polymère aqueuse de n'importe laquelle des revendications 1 à 12 et un pigment.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1193298 A1
- US 2012214928 A1
- EP 2918615 A1
- WO 2016004575 A1
- EP 2840092 A1
- US 2013085222 A1
- US 2013066005 A1
- US 6756459 B2